# EUROPEAN PATENT SPECIFICATION

(11) **EP 2 324 691 B1**
(45) Date of publication and mention of the grant of the patent: **09.08.2017**
(21) Application number: 10176698.8
(22) Date of filing: 14.09.2010
(51) Int. Cl.: A01B 59/00

(54) **PAIR OF HOOKS FOR THREE-POINT COUPLING**
HAKENPAAR FÜR EINE DREIPUNKTKUPPLUNG
PAIRE DE CROCHETS POUR COUPLAGE EN TROIS POINTS

(30) Priority: 15.09.2009 IT BO20090583
(43) Date of publication of application: 25.05.2011
(73) Proprietor: CBM S.p.A., 41100 Modena (IT)
(72) Inventor: CORNIA, Enrico Maria, 41100 Modena (MO) (IT)
(74) Representative: Provvisionato, Paolo

(56) References cited:
- EP-A1- 1 604 558
- EP-A2- 1 762 404
- WO-A1-2005/089528
- FR-A1- 2 535 934
- US-A- 3 356 388

## Description

The present invention relates to the field of three-point couplings for agricultural vehicles such as agricultural tractors and the like. The invention was developed with particular regard to the lower hooks for the three-point couplings.

In three-point couplings, two lower hooks and one upper hook, carried respectively by two lower arms and one upper arm which are mounted on the rear part of an agricultural vehicle, make it possible to hook on and tow an item of agricultural equipment. The lower arms are mounted in an articulated manner at the rear end of the agricultural vehicle at two points not far from the middle and extend, opening out from each other, towards the ends onto which the lower hooks are welded. The lower arms are therefore generally inclined with respect to a longitudinal vertical middle plane of the agricultural vehicle, while the lower hooks, for the purpose of correct coupling of the items of agricultural equipment, are mounted with their longitudinal median plane substantially parallel to that plane, thus forming a broken configuration of the lie of each lower arm with respect to its lower hook.

A very simple type of lower hooks for three-point couplings, which has for a long time now fallen into disuse because of its very limited performance and reliability, is illustrated in US 3.356.388. Each lower hook, equipped with a visible closure means, unprotected, and therefore subject to malfunction as a result of accumulation of soil, debris and the like, is provided with two 90° plates, placed respectively on the front of the hook, facing towards the agricultural tractor, and on the outer side of the hook. These two 90° plates have the sole function of forming, with an inwardly bent upper limb, two inclined chutes for guiding into the respective lower hook the coupling pins of the trailer. US Patent 3.356.388 suggests that the lower hooks should be mounted on their respective lower arms with a certain freedom of movement.

The development of three-point couplings has led to examples of more recent lower hooks in which the movable mechanisms are protected inside a case. In particular, each lower hook comprises a case with a crook which receives a coupling ball of the item of agricultural equipment which, during use, is locked in position by a movable closure means which protrudes from the hook case. A lever for disengaging the closure means makes it possible, by means of linkages housed inside the case, to disengage the closure means selectively in order to release the coupling ball of the item of agricultural equipment. An example of a hook of this type is described in patent EP 0 850 789 of the same Applicant.

Lower hooks of known type comprise a main portion produced by pressing and which forms almost the whole of the hook case, except for one side thereof, also being extended to form the crook of the hook. The pressed portion of the hook case is closed on the missing side by a metal plate welded to the pressed portion of the hook case. Preferably, the plate does not completely close the side of the hook, on which there is left a discharge opening which serves to discharge debris and dirt which could accumulate inside the hook case during use.

The lower hooks are classified by standards according to their dimensions (ISO 11001-3), and therefore to their strength, in four categories or classes, from the smallest class 1 to the largest and strongest class 4. Depending on the power of the agricultural tractor (ISO 730), it is necessary to fit lower hooks of a specific category. It sometimes occurs that the lower hooks may over time not withstand the stresses to which they are subjected, and that they break, practically always at the weld between the pressed portion of the case and the side closure plate.

The manufacturers tend to solve the problems of recurrent breakages by replacing the hooks of a specific class with hooks of the next highest class, but such a solution is not well received by the final users, since the items of agricultural equipment that are adapted to hooks of a certain class do not adapt well, or do not adapt at all, to hooks of a higher class. This problem is especially evident when changing from class 3 hooks to class 4 hooks, because of the substantial dimensional differences between these two classes of hooks.

A solution which was proposed in order to solve the problem of breakages of the cases of the lower hooks consisted in eliminating the welded portion, which represents the critical point of so many hooks. Since it is not possible to produce a closed case by pressing, the solution was to fabricate a hook case, and the crook which extends therefrom, entirely by casting. An example of the type is illustrated in EP-1 762 404. However, this solution has not come to be widely used because of the difficulty of identifying a material suitable for the casting process and at the same time with good strength characteristics after casting, in the light of the particularities of shape and dimensions of the lower hooks for three-point couplings. Moreover, the assembly of the linkages inside the hook case produced by casting is complicated and must be performed through openings of small dimensions.

The Applicant has systematically analysed the problem of breakage of the lower hooks, and has surprisingly discovered that the breakages of the weld between the pressed case and the side closure plate occurred, for hooks from the same manufacturer, always and solely on one side of the agricultural tractor. In other words, given a pair of identical hooks placed one on the right-hand arm and the other on the left-hand arm of the three-point coupling, it was noted that the breakages occurred systematically, for hooks from the same manufacturer, on the right-hand hook (or the left-hand hook for another manufacturer). It was then surprisingly found that the cause of the preferential breakage of the hook on one side with respect to the hook on the other side of the middle of the agricultural vehicle arose from the particular inclined configuration of the lower arms, which causes the development of flexion stresses on the lower hooks, about vertical axes passing substantially through the middle of the hooks. These flexion stresses involve tractive and compressive forces on the two faces of each lower hook.

In more detail, because of the misalignment of the tractive forces acting on the lower arm and on the lower hook, the lower hooks are subjected to tractive forces on their inner face, that is, facing towards the middle of the agricultural vehicle, and to corresponding compressive forces on their opposed outer face. Since the two lower hooks in the prior art are identical in construction, one of the two lower hooks will have as its inner face the side with the welded plate, while the other lower hook will have as its inner face the side produced by pressing. It was therefore possible to establish that the hook frequently subject to breakage is that in which the welded side plate is located on the side of the hook subjected to traction, that is, facing towards the middle, while the hook in which the welded plate is located on the side facing towards the outside fully resists the stresses during use of the three-point coupling on the agricultural vehicle.

On the basis of the analyses carried out by the Applicant, the present invention was developed, its aim therefore being that of solving and remedying the above-mentioned problems of the prior art, and in particular of reducing the recurrence of one of the two lower hooks breaking or reaching its limit of resistance much sooner than the other lower hook. A further aim of the invention is to provide a solution which is simple and economical, and of practical use both in the so-called first fitting, that is, during mounting on a new agricultural vehicle, and in the field of spare parts and the improvement of the characteristics of vehicles already in use.

In order to achieve the above aims, the subject of the invention is a pair of lower hooks for three-point coupling having the features indicated in the following claims 1 to 6. The invention also has as its subject a three-point coupling using such a pair of lower hooks.

Further features and advantages will became clear from the hollowing description of a preferred embodiment of the invention, with reference to the appended drawings, provided solely by way of non-limiting example, wherein:
- Figure 1 is a schematic view from above of a three-point coupling with a pair of lower hooks according to the invention,
- Figures 2 and 3 are lateral perspective views of the left-hand hook of the pair of hooks or the invention, respectively according to the arrows II and III of Figure 1, and
- Figures 4 and 5 are lateral perspective views of the right-hand hook of the pair of hooks of the invention, respectively according to the arrows IV and V of Figure 1.

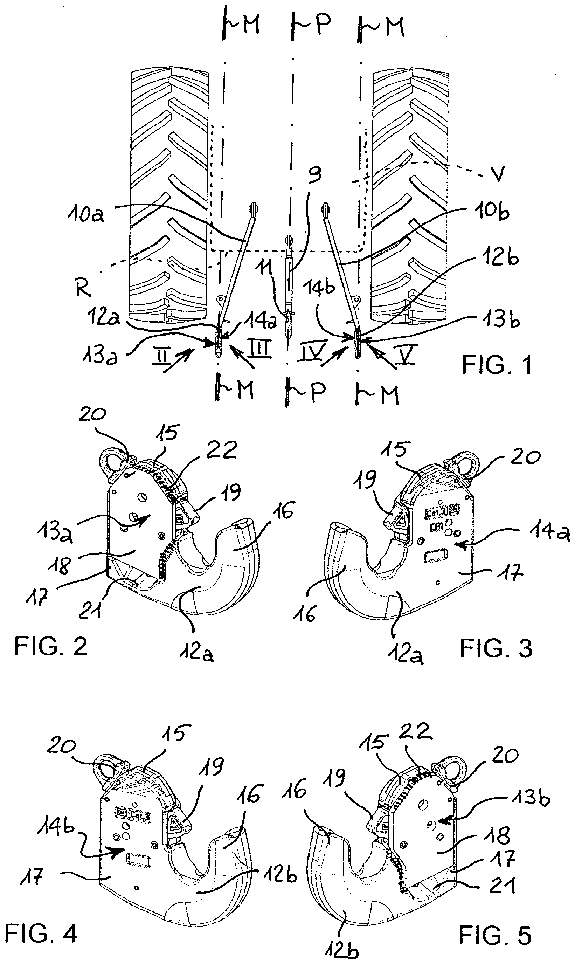

With reference to the drawings, a three-point coupling for the coupling of an item of agricultural equipment to an agricultural vehicle comprises an upper arm 9 and two lower arms, left-hand 10a, and right-hand 10b, which are mounted in an articulated manner in the rear part R of, an agricultural vehicle V and which carry at their respective ends an upper hook 11 and lower hooks, left-hand 12a and right-hand 12b. The lower arms 10a, 10b are inclined with respect to a vertical middle plane P in Figure 1, while the lower hooks 12a, 12b extend in a plane which is substantially parallel to the middle plane P. The hooks 12a, 12b are rigidly fixed to the respective lower arms 10a, 10b, preferably, but not limitatively, by means of welding or other rigid fixing systems.

As is more clearly visible in Figures 2 to 5, the left-hand lower hook 12a (Figures 2 and 3) and the right-hand lower hook 12b (Figures 4 and 5) have a body 15 with a crook portion 16 which protrudes, curved, from a case portion 17 which defines a side 14a of the left-hand hook 12a (Figure 3) and a side 14b of the right-hand hook 12b. The sides 14a, 14b form an integral part of the case portion 17, produced by pressing integrally with the crook portion, and comprising a cavity (not visible in the drawings) within which are housed the mechanisms for automatic actuation of a closure means 19 and for manual disengagement thereof by means of a lever 20. The hook actuating mechanisms, like their operation for coupling and uncoupling, will not be described in more detail since they are generally known, for example from EP 0 850 789.

The case portion 17 of the hooks 12a, 12b is closed by a closure plate 18, which defines the other side 13a (Figure 2) of the left-hand hook 12a and the other side 13b (Figure 5) of the right-hand hook 12b. The closure plate 18 is fixed, for example by means of a continuous weld bead 22 or by spots or by equivalent means, to the body 15 in such a way as to close the cavity of the case portion 17 except, preferably but non-limitatively, in the region of a lower discharge opening 21 (visible in Fig. 2), conveniently left open to allow the discharge of any debris which might accumulate inside the hook during use.

As shown in Figure 1, the left-hand hook 12a and the right-hand hook 12b, which are mounted on the respective lower arms, left-hand 10a and right-hand 10b, are symmetrical with reference to the embodiment of the sides 14a and 14b (produced by pressing integrally with the bodies 15) and of the opposite sides 13a and 13b (defined by the closure plates 18). In particular, the sides 14a and 14b, produced by pressing, both face towards the inside, that is, facing the middle P of the agricultural vehicle V, and are therefore defined here as inner sides for the sake of simplicity of description. The sides 13a and 13b, produced by the welded plates 18 (and therefore less strong than the pressed sides 14a, 14b) instead face towards the outside of the three-point coupling, and are therefore defined here as outer sides for the sake of simplicity of description.

In order to clarify even further the concept of the invention, considering a longitudinal median plane M (Figure 1) of a single hook 12a or 12b, which in use is substantially parallel to the middle plane P of the agricultural vehicle, with respect to the longitudinal median plane M it is possible to define a left-hand side and a right-hand side of each hook (which are left-hand and right-hand sides relative to each hook, not to be confused with the left-hand hook 12a and the right-hand hook 12b, which are defined by their relationship with respect to the middle plane P of a vehicle V in the mounted state of the three-point coupling). In a pair of lower hooks 12a, 12b to be employed in the same three-point coupling, the sides 13a and 13b formed by the plates 18 on each hook are disposed respectively on one side (shown on the left in Figure 1) of the left-hand hook 12a and on the opposite side (shown on the right in Figure 1) of the right-hand hook 12b. The definitions "right-hand" and "left-hand" are obviously relative to the plane of reference and to the direction in which each hook is considered to be viewed with respect to that plane. In other words, however, the present description relates to two lower hooks which are symmetrical with regard to the construction of the body 15 with reference to the pressed case 17 and to the closure plate 18. Such symmetrical hooks are mounted on the lower arms of the same three-point coupling in such a way that the pressed face is turned towards the inside and the welded face, comprising the plate 18, is turned towards the outside. To sum up, with reference to the position of the closure plate 18 with respect to the case 17, the one which is on the right hand in one hook, is on the left hand in the other hook of the pair of hooks of the same three-point coupling. The two hooks of the pair of hooks are therefore substantially mirror images of each other.

By means of this configuration and arrangement of the left-hand lower hook 12a and right-hand lower hook 12b of the three-point coupling, in use it is possible to obtain substantial symmetry of the stresses acting on the two hooks, with a corresponding equal resistance and service life of the two hooks, in particular owing to the fact that the weaker areas, that is, the sides 13a, 13b with the welds 22, are turned towards the outside of the three-point coupling and are predominantly subjected to compressive forces, while the more critical tractive forces, on the inner sides 14a, 14b of the hooks 12a, 12b, are withstood by a resistant structure produced by pressing.

Naturally, with the principle of the invention remaining the same, the embodiments may vary widely with respect to those described and illustrated, without thereby departing from the scope of the present invention, as defined in the attached claims.

## Claims

1. A pair of lower hooks for a three-point coupling, each hook (12a, 12b) comprising a body (15) with a crook portion (16) protruding from a case portion (17) within which are housed actuating mechanisms for a closure means (19), the case portion (17) defining with one of its walls a first side (14a, 14b) and being at least partly closed by a closure plate (18) which at least partly defines a second side (13a, 13b), **characterized in that** the two hooks (12a,12b) are substantially mirror images of each other with regard to the case portion (17) and the closure plate (18).

2. A pair of lower hooks according to claim 1, each body (15) having a first side and a second side on opposite sides with respect to a longitudinal median plane (M) of each hook, **characterized in that** the first sides (14a, 14b) of the two hooks (12a, 12b) of the pair of lower hooks are respectively disposed on opposite sides with respect to the longitudinal median plane (M) of each respective hook, the second sides (13a, 13b) being respectively disposed on the other, opposite, sides with respect to the longitudinal median plane (M), of each respective hook.

3. A pair of lower hooks according to claim 1 or 2, **characterized in that** the case portion (17) is produced by pressing.

4. A pair of lower hooks according to claim 3, **characterized in that** the crook portion (16) is produce integrally by pressing with the case portion (17).

5. A pair of lower hooks according to any one of the preceding claims, **characterized in that** the plate (18) is welded to the case portion (17).

6. A pair of lower hooks according to claim 5, **characterized in that** the plate (18) only partially closes the case portion (17) in order to form a discharge opening (21).

7. A three-point coupling for an agricultural vehicle, comprising a pair of lower arms inclined with respect to a middle plane (P) of the vehicle, each lower arm (10a, 10b) carrying at its end a respective lower hook of a pair of lower hooks (12a, 12b) according to any one of claims 1 to 6 and having their longitudinal median planes (M) substantially parallel to the middle plane (P), the first sides (14a, 14b) of the lower hooks, defined at least in part by the walls of the case portions (17), being turned towards the middle of the vehicle in such a way as to face each other.

## Patentansprüche

1. Unteres Hakenpaar für eine Dreipunktkupplung, wobei jeder Haken (12a, 12b) einen Körper (15) mit einem Krümmungsbereich (16) umfasst, der aus einem Gehäusebereich (17) herausragt, innerhalb dessen sich eingebaute Betätigungsmechanismen für ein Schließmittel (19) befinden, wobei der Gehäusebereich (17) mit einer seiner Wände eine erste Seite (14a, 14b) definiert und zumindest teilweise durch eine Verschlussplatte (18) verschlossen ist, die zumindest teilweise eine zweite Seite (13a, 13b) definiert, **dadurch gekennzeichnet, dass** die beiden Haken (12a, 12b) hinsichtlich des Gehäusebereichs (17) und der Verschlussplatte (18) im Wesentlichen Spiegelbilder voneinander sind.

2. Unteres Hakenpaar gemäß Anspruch 1, wobei jeder Körper (15) auf gegenüberliegenden Seiten hinsichtlich einer longitudinalen Mittelebene (M) jedes Hakens eine erste Seite und eine zweite Seite hat, **dadurch gekennzeichnet, dass** die ersten Seiten (14a, 14b) der beiden Haken (12a, 12b) des unteren Hakenpaares jeweils auf gegenüberliegenden Seiten hinsichtlich der longitudinalen Mittelebene (M) des jeweiligen Hakens angeordnet sind, wobei die zweiten Seiten (13a, 13b) jeweils auf den anderen, gegenüberliegenden Seiten hinsichtlich der longitudinalen Mittelebene (M) des jeweiligen Hakens angeordnet sind.

3. Unteres Hakenpaar gemäß Anspruch 1 oder 2, **dadurch gekennzeichnet, dass** der Gehäusebereich (17) durch Pressen produziert wird.

4. Unteres Hakenpaar gemäß Anspruch 3, **dadurch gekennzeichnet, dass** der Krümmungsbereich (16) durch Pressen mit dem Gehäusebereich (17) integral produziert wird.

5. Unteres Hakenpaar gemäß einem der vorhergehenden Ansprüche, **dadurch gekennzeichnet, dass** die Platte (18) an den Gehäusebereich (17) angeschweißt ist.

6. Unteres Hakenpaar gemäß Anspruch 5, **dadurch gekennzeichnet, dass** die Platte (18) den Gehäusebereich (17) nur teilweise verschließt, um eine Austrittsöffnung (21) zu formen.

7. Dreipunktkupplung für ein landwirtschaftliches Fahrzeug, umfassend ein Paar von Unterarmen, das hinsichtlich einer Mittelebene (P) des Fahrzeuges geneigt ist, wobei jeder Unterarm (10a, 10b) an seinem Ende jeweils einen unteren Haken eines unteren Hakenpaares (12a, 12b) gemäß einem der Ansprüche 1 bis 6 trägt und dessen longitudinalen Mittelebene (M) im Wesentlichen parallel zur Mittelebene (P) ist, wobei die ersten Seiten (14a, 14b) der unteren Haken, die zumindest teilweise durch die Wände der Gehäusebereiche (17) definiert sind, so in Richtung der Mitte des Fahrzeugs gedreht sind, dass sie sich gegenüberliegen.

## Revendications

1. Paire de crochets inférieurs pour un attelage trois points, chaque crochet (12a, 12b) comprenant un corps (15) comportant une partie recourbée (16) faisant saillie à partir d'une partie formant boîtier (17) à l'intérieur de laquelle sont logés des mécanismes d'actionnement pour un moyen de fermeture (19), la partie formant boîtier (17) définissant avec l'une de ses parois un premier côté (14a, 14b) et étant au moins partiellement fermée par une plaque de fermeture (18) qui définit au moins partiellement un second côté (13a, 13b), **caractérisée en ce que** les deux crochets (12a, 12b) sont essentiellement des images spéculaires l'un de l'autre par rapport à la partie formant boîtier (17) et à la plaque de fermeture (18).

2. Paire de crochets inférieurs selon la revendication 1, chaque corps (15) comportant un premier côté et un second côté sur des côtés opposés par rapport à un plan médian longitudinal (M) de chaque crochet, **caractérisée en ce que** les premiers côtés (14a, 14b) des deux crochets (12a, 12b) de la paire de crochets inférieurs sont respectivement disposés sur des côtés opposés par rapport au plan médian longitudinal (M) de chaque crochet respectif, les seconds côtés (13a, 13b) étant respectivement disposés sur les autres côtés, opposés, par rapport au plan médian longitudinal (M) de chaque crochet respectif.

3. Paire de crochets inférieurs selon la revendication 1 ou 2, **caractérisée en ce que** la partie formant boîtier (17) est produite par formage à la presse.

4. Paire de crochets inférieurs selon la revendication 3, **caractérisée en ce que** la partie recourbée (16) est produite d'un seul tenant par formage à la presse avec la partie formant boîtier (17).

5. Paire de crochets inférieurs selon l'une quelconque des revendications précédentes, **caractérisée en ce que** la plaque (18) est soudée à la partie formant boîtier (17).

6. Paire de crochets inférieurs selon la revendication 5, **caractérisée en ce que** la plaque (18) ferme seulement partiellement la partie formant boîtier (17) de façon à former une ouverture d'évacuation (21).

7. Attelage trois points pour un véhicule agricole, comprenant une paire de bras inférieurs inclinés par rapport à un plan central (P) du véhicule, chaque bras inférieur (10a, 10b) portant à son extrémité un crochet inférieur respectif d'une paire de crochets inférieurs (12a, 12b) selon l'une quelconque des revendications 1 à 6 et ayant leurs plans médians longitudinaux (M) essentiellement parallèles au plan central (P), les premiers côtés (14a, 14b) des crochets inférieurs, définis au moins partiellement par les parois des parties formant boîtiers (17), étant orientés en direction du centre du véhicule de telle sorte qu'ils se trouvent en regard l'un de l'autre.
